Europäisches Patentamt

European Patent Office

Office européen des brevets

(19)

(11) Veröffentlichungsnummer : **0 085 922**
**B1**

# (12) EUROPÄISCHE PATENTSCHRIFT

(45) Veröffentlichungstag der Patentschrift :
05.03.86

(21) Anmeldenummer : 83100868.5

(22) Anmeldetag : 31.01.83

(51) Int. Cl.⁴ : **A 01 N 25/02**, A 01 N 25/22,
A 01 N 25/04, A 01 N 47/30 //
(A01N47/30, 33:18)

(54) **Herbizide Mittel.**

(30) Priorität : 04.02.82 DE 3203779

(43) Veröffentlichungstag der Anmeldung :
17.08.83 Patentblatt 83/33

(45) Bekanntmachung des Hinweises auf die Patenterteilung : 05.03.86 Patentblatt 86/10

(84) Benannte Vertragsstaaten :
**AT BE CH DE FR GB IT LI NL SE**

(56) Entgegenhaltungen :
**DE-A- 2 900 768**
**DE-A- 2 905 122**
**DE-A- 2 914 164**
**DE-A- 3 121 739**
**Die Akte enthält technische Angaben, die nach dem
Eingang der Anmeldung eingereicht wurden und die
nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Albrecht, Konrad, Dr.**
**Sodener Strasse 64**
**D-6233 Kelkheim (Taunus) (DE)**
Erfinder : **Heinrich, Rudolf, Dr.**
**Taunusstrasse 19**
**D-6233 Kelkheim (Taunus) (DE)**
Erfinder : **Schumacher, Hans, Dr.**
**Claudiusstrasse 4**
**D-6093 Flörsheim am Main (DE)**

## Beschreibung

Die vorliegende Erfindung betrifft flüssige, herbizide Mittel in Form von emulgierbaren Konzentraten, die 3-(3,4-Dichlorphenyl)-1-methyl-1-methoxy-harnstoff (common name : Linuron) und N,N-Dipropyl-4-trifluormethyl-2,6-dinitro-anilin (common name : Trifluralin) als Wirkstoff sowie Lösungsmittel enthalten, die das Auskristallisieren von Linuron in den wäßrigen Emulsionen der Konzentrate verhindern.

Es ist bekannt, Linuron (siehe DE-C-1 028 986) und Trifluralin (siehe DE-C-1 300 727) als Herbizide zu verwenden. Es ist außerdem bekannt, daß man das Wirkungsspektrum jedes der Wirkstoffe erweitern kann, wenn man Formulierungen beider Wirkstoffe zusammen in Form von Tankmischungen appliziert (vgl. Report of United States Southern Weed Conference, January 1969). In der DE-A-2 435 747 wird die Herstellung eines emulgierbaren Konzentrates beschrieben, das Linuron und Trifluralin sowie alicyclische Ketone als Lösungsmittel enthält, wobei Emulgatoren eingesetzt werden müssen, die als Nebenkomponenten oder Lösungsmittel keine Alkohole enthalten.

Es ist zum anderen bekannt, daß emulgierbare Konzentrate von Linuron bei dem Verrühren in kaltem Wasser zunächst zwar Emulsionen bilden, diese sich aber alsbald in sogenannte Suspo-Emulsionen umwandeln. Letztere sind wäßrige Dispersionen, in denen feste Wirkstoffteilchen und feine Tröpfchen von Wirkstofflösungen in wasserunlöslichen Lösungsmitteln nebeneinander vorhanden sind. Aus diesen Suspo-Emulsionen bilden sich rasch Linuronkristalle aus, die in Form grober Kristallnadeln von 100-200 Mikron Länge ausfallen und auch sedimentieren. Derartige Suspo-Emulsionen besitzen vor allem eine geringere Wirksamkeit, da der Wirkstoff in einer zu groben und inhomogenen Verteilung vorliegt. Dies hat außerdem zur Folge, daß die groben Kristalle die Spritzdüsen der Ausbringgeräte verstopfen können, so daß Applikationen gegebenenfalls abgebrochen werden müssen. Aus DE-A-2 905 122 und DE-A-2 914 867 ist weiterhin bekannt, daß das Auskristallisieren von Linuron aus den wäßrigen Emulsionen seiner emulgierbaren Konzentrate unter Bildung grober Kristalle dadurch verhindert werden kann, daß man den emulgierbaren Konzentraten von Linuron in aromatischen Lösungsmitteln und alicyclischen Ketonen geringe Mengen eines Bis-azo-farbstoffs oder eines Phthalsäureesters bzw. eines Phthalsäurealkydharzes oder Terpenphenolharzes zusetzt.

Emulgierbare Konzentrate von Trifluralin können problemlos in aromatischen Lösungsmitteln, bei höherkonzentrierten Formulierungen aufgrund des besseren Lösevermögens auch unter Zusatz von alicyclischen Ketonen hergestellt werden. Die Lösungsmittel und die Konzentration des Wirkstoffes im Konzentrat müssen dabei so abgestimmt sein, daß der Wirkstoff auch in der Kälte nicht aus der flüssigen Formulierung auskristallisiert, damit das Mittel auch in kalten Lagerhallen bei 0 °C, besser noch bis − 10 °C, aus Großgebinden in homogener Form abgefüllt werden kann. Trifluralin kristallisiert aus wäßrigen Emulsionen im allgemeinen nicht aus und diesbezügliche Schwierigkeiten wie im Fall des Linurons sind bisher nicht bekannt geworden.

Bei der Herstellung von emulgierbaren Konzentraten, die Kombinationen von Linuron und Trifluralin, vorzugsweise im Verhältnis 1 : 3 bis 3 : 1, enthielten, zeigte sich nun, daß emulgierbare Konzentrate, die gemäß der eingangs bereits erwähnten DE-A-2 435 747 alicyclische Ketone, z. B. Isophoron, Cyclohexanon oder Acetophenon, neben Xylol oder Aromatenfraktionen im Siedebereich von 140-180 °C bzw. 160-210 °C enthalten, zwar lagerungs- und kältestabil sind, jedoch das für Linuron typische Merkmal besitzen, nach dem Verrühren der Konzentrate in Wasser Suspo-Emulsionen zu bilden, aus denen nach kurzer Zeit Linuron in Nadeln bis zu 120 Mikron Länge abgeschieden wird.

Die Kristalle sind um so größer, je kälter das zum Ansetzen der Emulsion verwendete Wasser und je verdünnter die Anwendungskonzentration des Mittels ist. Für den praktischen Einsatz muß jedoch ein derartiges emulgierbares Konzentrat zumindest in Wasser von 10 °C und in Anwendungskonzentrationen von 1 bis 2 Liter/100 Liter Wasser anwendbar sein.

Das Auskristallisieren von Linuron aus der wäßrigen Emulsion eines emulgierbaren Konzentrates, das Linuron und Trifluralin sowie alicyclische Ketone neben aromatischen Lösungsmitteln und Emulgatoren enthält, kann jedoch durch die aus den bereits erwähnten DE-A-2 905 122 und 2 914 867 bekannt gewordenen Stabilisatoren nicht verhindert werden.

In der DE-A 29 00 768 werden flüssige, in Wasser emulgierbare herbizide Mittel beschrieben, die substituierte Dinitroaniline wie Trifluralin und/oder substituierte N-Phenylharnstoffe wie Linuron und ein organisches Lösemittel aus der Gruppe der Dialkyl- oder Alkylformamide und gegebenenfalls nichtionische oder anionische Emulgiermittel und Kohlenwasserstoffe wie Aromaten als weiteres organisches Lösemittel enthalten. Als Dialkylformamide werden konkret nur (S. 11 der DE-A) Dimethyl- und Diethylformamid aufgeführt. Die Problematik der Verbindung einer Kristallbildung beim Stehenlassen oder Rühren von aus diesen Mitteln hergestellten wäßrigen Emulsionen wird nicht angesprochen.

Aus der DE-A 2 914 164 ist ein Verfahren zur Entblätterung von Kulturpflanzen bekannt, bei dem man auf die Pflanzen eine wirksame Menge eines Gemisches aus einem N-Phenylharnstoffderivat wie Metoxuron und einem organischen Lösemittel wie einem primären, sekundären oder tertiären aliphatischen Amin oder einem Phosphorsäureester (z. B. Tri-n-butylphosphat) und gegebenenfalls zusätzlichen Komponenten wie Emulgiermitteln und weiteren organischen Lösemitteln aufbringt. Bei den weiteren organischen Lösemitteln wird u. a. auch Dimethylformamid aufgeführt (S. 14 der DE-A). Die Problematik der Verhinderung einer Kristallbildung ist auch in dieser Veröffentlichung nicht angesprochen und das Gemisch enthält weder Linuron noch Trifluralin als Wirkstoff.

2

Es wurde nun überraschenderweise gefunden, daß man alle in Zusammenhang mit dem Auskristallisieren von Linuron aus wäßrigen Verdünnungen flüssiger, emulgierbarer Konzentrate, die Linuron und Trifluralin enthalten, genannten Nachteile überwinden kann und das Kristallwachstum von Linuron in wäßrigen Spritzflüssigkeiten blockieren kann, wenn man als Lösungsmittel Tri-n-butylphosphat und/oder Di-n-butylformamid, gegebenenfalls in Kombination mit aromatischen Lösungsmitteln, neben üblichen Emulgatoren, gegebenenfalls unter Zusatz geringer Mengen Phthalsäurealkydharz, verwendet. Vorteilhaft ist hierbei, daß zur Erstellung lagerungs- und wirkstoffstabiler Zubereitungen durchaus nicht auf teure und schwieriger herzustellende alkohol- und polyglykolfreie Emulgatoren zurückgegriffen werden muß, wie das für Formulierungen entsprechend der DE-A 2 435 747 gefordert wird. Es können statt dessen übliche Emulgatoren, wie z. B. handelsübliche Lösungen von dodecylbenzolsulfosaurem Calcium in Isobutanol und Rizinusöl-polyglykolether Verwendung finden. Darüber hinaus sind auch keine ketonischen Lösungsmittel erforderlich.

Gegenstand der Erfindung sind daher flüssige, herbizide Mittel in Form von emulgierbaren Konzentraten, enthaltend die Wirkstoffe Linuron und Trifluralin, organische Lösungsmittel, Emulgatoren und gegebenenfalls kristallisationshemmende Bestandteile, dadurch gekennzeichnet, daß sie

20-45 Gew.-% Linuron und Trifluralin, im Gewichtsverhältnis 1 : 3 bis 3 : 1
53-11 Gew.-% aromatisches Lösungsmittel,
35-10 Gew.-% Tri-n-butylphosphat und/oder Di-n-butylformamid,
0- 3 Gew.-% Phthalsäurealkydharz und
7-16 Gew.-% Emulgatoren

enthalten.

Das Gewichtsverhältnis von Tri-n-butylphosphat und/oder Di-n-butylformamid zu aromatischem Lösungsmittel liegt vorzugsweise im Bereich von 10 : 1 bis 1 : 5.

Als aromatische Lösungsmittel werden z. B. Alkylbenzole, vorzugsweise Xylol, aber auch höher siedende technische Aromatendestillate, z. B. auf Mineralölbasis, im Siedebereich von z. B. 135-312 °C (bei Normaldruck) eingesetzt.

Bevorzugte aromatische Lösungsmittel sind außerdem chlorierte aromatische Lösungsmittel, insbesondere Chlorbenzol und auch Chlortoluol.

Tri-n-butylphosphat wird großtechnisch hergestellt. Di-n-butylformamid kann u. a. auch durch Erhitzen von Di-n-butyl-amin und Ameisensäure unter Abdestillieren des gebildeten Wassers gewonnen werden.

Unter Emulgatoren sind alle bekannten, zur Formulierung von emulgierbaren Konzentraten verwendeten oberflächenaktiven Stoffe zu verstehen wie Calciumsalze von Alkylbenzolsulfosäuren, vorzugsweise Dodecylbenzolsulfonsäure, oder von chlorierten ($C_{13}$-$C_{15}$)-Alkansulfonsäuren, neben Polyglykolethern von z. B. Nonylphenolen oder Polyglykolethern von z. B. Fettalkoholen oder z. B. Umsetzungsprodukten von Rizinusöl mit Ethylenoxid (= Rizinusölpolygkykolether).

Die erfindungsgemäßen emulgierbaren Konzentrate von Linuron und Trifluralin können z. B. auf einfache Weise dadurch hergestellt werden, daß man in die vorgelegten Lösungsmittel Linuron, Trifluralin, die Emulgatoren sowie ggfs. die übrigen Formulierungskomponenten eindosiert und unter Rühren löst.

Bei der Anwendung der emulgierbaren Konzentrate werden die je nach Konzentration der Mittel erforderlichen Volumina abgemessen, in Wasser verrührt und in Form verdünnter Emulsionen auf dem Feld ausgespritzt.

Die erfindungsgemäß kristallisationshemmend stabilisierten emulgierbaren Konzentrate sind chemisch, physikalisch sowie anwendungstechnisch ausgezeichnet lagerungsstabil, wie Lagerungsteste unter erschwerten Bedingungen, wie z. B. 3 Monate bei 50 °C bzw. verschiedene Kältetests zeigten.

Die folgenden Beispiele zeigen die Wirkung der erfindungsgemäßen, kristallisationshemmenden Lösungsmittel sowie die vorteilhafte biologische Wirksamkeit erfindungsgemäßer, emulgierbarer Linuron-Trifluralin-Konzentrate. Für die biologischen Versuche wurde als Vergleichsmittel ein im Handel befindliches Konzentrat eingesetzt.

Formulierungsbeispiele

Beispiele 1-7

Die in der nachstehenden Tabelle 1 zusammengefaßt wiedergegebenen Beispiele 1 bis 7 zeigen das Verhalten von wäßrigen Emulsionen erfindungsgemäßer Emulsionskonzentrate gegenüber den Vergleichsbeispielen A und B, wobei in Beispiel A das handelsübliche Emulsionskonzentrat « Mukeda N » der Fa. Eli Lilly mit Gehalten von 11,75 Gew.-% Linuron, 23,5 Gew.-% Trifluralin und einem ketonischen Lösungsmittel entsprechend DE-A-2 435 747 eingesetzt, und in Beispiel B ein im Wirkstoffgehalt dem Beispiel A entsprechendes Emulsionskonzentrat mit einer Lösungsmittelkombination aus Xylol, Isophoron und Alkydharz, jedoch ohne die erfindungsgemäßen Lösungsmittelbestandteile Di-n-butylformamid bzw. Tri-n-butylphosphat eingesetzt wurden. Entsprechend den in der Tabelle 1 angegebenen Zusammensetzungen wurden die Formulierungen der Beispiele B und 1 bis 7 durch Auflösen der erforderlichen Mengen von Linuron und Trifluralin sowie ggfs. Alkydharz in den angegebenen Lösungsmitteln und Emulgatoren hergestellt. Alle emulgierbaren Konzentrate wurden vor ihrer Prüfung filtriert, um sicherzustellen, daß keine ungelösten Bestandteile oder Schwebestoffe die Prüfung der Stabilität der durch Verdünnen mit Wasser hergestellten 1 %igen Emulsionen stören können. Zur Prüfung der Stabilität der Emulsionen wurden jeweils 10 ml emulgierbares Konzentrat in jeweils 990 ml Wasser von 10 °C und 342 ppm Calciumcarbonat-Härte (standardisiertes Wasser entsprechend der WHO- und CIPAC-Prüfbestimmungen) verrührt und nach den in Tabelle 1 angegebenen Rührzeiten (Stunden) Proben entnommen und unter dem Mikroskop oder durch Absieben die ggfs. darin gebildeten Kristalle von über 71 Mikron Größe ermittelt, da letztere die üblichen Siebvorrichtungen vor den Zerstäubungsdüsen von Applikationsgeräten für die Emulsionen verstopfen würden. Anwendungstechnish brauchbar sind nur solche Formulierungen, deren Emulsionen auch nach langem Stehen oder Rühren keine derartig groben Kristalle abscheiden. Das Rührtestergebnis ist in der letzten Spalte von Tabelle 1 zusammengefaßt wiedergegeben.

(Siehe Tabelle 1 Seite 5 f.)

## Tabelle 1

Zusammensetzung der Emulsionskonzentrate in Gew.-%, Rührzeit mit 1 %igen Emulsionen in Stunden (h)
und Kristallgrößen in Mikron (μ)

| Beispiel-Nr. | Linuron | Trifluralin | Calciumdodecylbenzol-sulfonat * | Rizinusölpolyglykol-äther ** | Phthalsäurealkydharz *** | Xylol | Chlorbenzol | Isophoron | Tri-n-butylphosphat | Di-n-butylformamid | Rührtestergebnis mit 1%-igen Emulsionen; Rührzeit in Stunden (h); Kristallgrößen in Mikron (μ) |
|---|---|---|---|---|---|---|---|---|---|---|---|
| A (Vgl.) | Mudeka N | | | | | | | | | | 1 h-Kristalle von >71 bis 150 μ |
| B (Vgl.) | 11,75 | 23,5 | 5 | 10 | 3 | 22 | – | 24,75 | – | – | 1 h-Kristalle von >71 bis 150 μ |
| 1 | 11,75 | 23,5 | 5 | 11 | 3 | – | 25,75 | – | – | 20. | 1 h-keine Kristalle |
| 2 | 11,75 | 23,5 | 5 | 11 | 3 | – | 22 | – | 23,75 | – | 3 h-keine Kristalle |
| 3 | 11,75 | 23,5 | 5 | 11 | – | – | 25 | – | 23;75 | – | 2 h-keine Kristalle |
| 4 | 7,5 | 22,5 | 5 | 11 | 2 | – | 32 | – | 20 | – | 2 h-keine Kristalle |
| 5 | 15 | 5 | 4 | 8 | 2 | – | 51 | –. | 15 | – | 3 h-keine Kristalle |
| 6 | 11,75 | 23,5 | 5 | 11 | 3 | – | 22 | – | 12 | 11,75 | 3 h-keine Kristalle |
| 7 | 7,5 | 22,5 | 5 | 11 | 2 | 32 | – | .– | 20 | – | 2 h-keine Kristalle |

\* 70 %ige Lösung in Isobutanol
\*\* mit 40 AeO-Einheiten im Molekül
\*\*\* Alftalat AR 400 (Hoechst AG)

Biologische Beispiele

Beispiel I

Es wurden die Gewächshaus-Vergleichsversuche 1 bis 3 durchgeführt mit jeweils 1-, 2-, 3- und 4-%igen wäßrigen Emulsionen von emulgierbaren Konzentraten des Vergleichs-Beispiels A (= Mudeka N) (Versuche 1 und 2) und des erfindungsgemäßen Beispiels 2 (Versuch 3) in den in der Tabelle 1 angegebenen Dosierungen (= Liter emulgierbares Konzentrat pro Hektar) an den Unkräutern Lolium multiflorum, Stellaria media, Matricaria chamomilla und den Getreidearten Weizen sowie Wintergerste, und die jeweiligen Schadwirkungen (in %), vergleichsweise zu entsprechenden unbehandelten Pflanzenkulturen, ermittelt. Die Versuche wurden wie folgt durchgeführt :

Neubauerschalen wurden jeweils mit 600 g Boden befüllt, Unkrautsamen und Getreide eingesät, mit Boden abgedeckt und die zu prüfenden emulgierbaren Konzentrate der Beispiele A und 2 zu jeweils 1-, 2-, 3- und 4-vol-%igen Emulsionen in standardhartem Wasser von 10 °C emulgiert und die Emulsionen in Aufwandmengen von jeweils 100 l/ha auf die Bodenflächen aufgespritzt. Das Ausspritzen der Emulsionen erfolgte bei dem Versuch 1 sofort nach deren Herstellung, während bei den Versuchen 2 und 3 die hergestellten Emulsionen vor dem Ausspritzen zunächst 1 Stunde lang gerührt wurden. Die Neubauerschalen wurden anschließend im Gewächshaus bei 20 °C aufgestellt und einheitlich feucht gehalten. Nach 30 Tagen wurde die Pflanzenschädigung im Vergleich zur unbehandelten Kontrolle in Prozent ermittelt. Das Ergebnis ist in der Tabelle I zusammengefaßt wiedergegeben. Die Werte lassen erkennen, daß Wirkung und Toleranz der beiden geprüften Formulierungen im Rahmen der biologischen Schwankungen bei gleichen Dosierungen dann nicht voneinander abweichen, wenn die Formulierung nach dem Vergleichs-Beispiel A sofort nach der Emulsionsherstellung ausgespritzt wird (Versuch 1). Dagegen nimmt die letztere Formulierung deutlich in der Wirkung ab, wenn die Emulsion vor dem Ausspritzen zunächst 1 Stunde lang gerührt wurde. Im letteren Fall trat aus der Emulsion grobkristallines Linuron aus, das sich nicht mehr ausspritzen ließ, so daß die Wirksamkeit der Spritzbehandlung vermindert wurde, was sich insbesondere bei der Bekämpfung der Linuron-empfindlichen Matricaria chamomilla-Pflanzen bemerkbar machte (Versuch 2). Im Gegensatz dazu zeigte die Formulierung nach dem erfindungsgemäßen Beispiel 2 auch nach einstündigem Rühren der Emulsionen die volle Wirksamkeit (Versuch 3).

Tabelle I

| Versuch Nr. | Emulgierbares Konzentrat gemäß Formulierungs-Beispiel Nr. sowie dessen Anwendung | Dosis (Liter Konzentrat pro Hektar) | Schadwirkung in Prozent bei | | | | |
|---|---|---|---|---|---|---|---|
| | | | Lolium multi-florum | Stel-laria media | Matri-caria chamo-milla | Weizen | W.-Gerste |
| 1 | Vergl.-Beisp. A, Emulsionen sofort nach Herstellung ausgespritzt | 1,0 | 2 | 95 | 69 | 0 | 0 |
| | | 2,0 | 40 | 100 | 99 | 0 | 0 |
| | | 3,0 | 62 | 100 | 100 | 0 | 0 |
| | | 4,0 | | | | 7 | 0 |
| 2 | Vergl.-Beisp. A, Emulsionen nach Herst. 1 Std. gerührt u. danach ausgespritzt | 1,0 | 2 | 95 | 59 | 0 | 0 |
| | | 2,0 | 40 | 100 | 85 | 0 | 0 |
| | | 3,0 | 62 | 100 | 95 | 0 | 0 |
| | | 4,0 | | | | 7 | 0 |
| 3 | Beispiel 2, Emulsionen nach Herst. 1 Std. gerührt u. danach ausgespritzt | 1,0 | 15 | 97 | 97 | 0 | 0 |
| | | 2,0 | 41 | 100 | 100 | 0 | 0 |
| | | 3,0 | 66 | 100 | 100 | 0 | 0 |
| | | 4,0 | | | | 7 | 0 |

# 0 085 922

**Patentansprüche**

1. Herbizide Mittel zeichnet, daß sie

20-45 Gew.-% Linuron und Trifluralin, im Gewichtsverhältnis 1 : 3 bis 3 : 1
53-11 Gew.-% aromatisches Lösungsmittel,
35-11 Gew.-% Tri-n-butylphosphat und/oder Di-n-butyl-formamid,
 0- 3 Gew.-% Phthalsäurealkydharz und
 7-16 Gew.-% Emulgatoren

enthalten.

2. Herbizide Mittel nach Anspruch 1, dadurch gekennzeichnet, daß das Gewichtsverhältnis von Tri-n-butylphosphat und/oder Di-n-butylformamid zu aromatischem Lösungsmittel 10 : 1 bis 1 : 5 beträgt.

3. Herbizide Mittel nach Ansprüchen 1 oder 2, dadurch gekennzeichnet, daß sie als aromatische Lösungsmittel Chlorbenzol, Chlortoluol, Xylol oder aromatische Lösungsmittelfraktionen im Siedebereich von 135-312 °C enthalten.

4. Herbizide Mittel nach Ansprüchen 1 bis 3, dadurch gekennzeichnet, daß sie eine Kombination aus anionischen und nichtionogenen Emulgatoren enthalten.

5. Herbizide Mittel nach Anspruch 4, dadurch gekennzeichnet, daß sie Calciumdodecylbenzolsulfonat oder die Calciumsalze von chlorierten $(C_{13}-C_{15})$-Alkansulfonsäuren in Kombination mit Fettalkoholpolyglykolethern oder $(C_8-C_{12})$-Alkylphenolpolyglykolethern oder oxäthyliertem Rizinusöl als Emulgatoren enthalten.

6. Verfahren zur Bekämpfung von Schadpflanzen in Nutzpflanzenkulturen, dadurch gekennzeichnet, daß man auf diese oder auf die Anbauflächen eine wirksame Menge eines Mittels gemäß Ansprüchen 1-5 aufbringt.

7. Verwendung von herbiziden Mitteln gemäß Ansprüchen 1-5 zur Bekämpfung von Schadpflanzen.

**Claims**

1. Herbicidal agents which comprise

20-45 % b.w. Linuron and Trifluralin in a weight ratio of 1 : 3 to 3 : 1
53-11 % b.w. aromatic solvent
35-11 % b.w. Tri-n-butyl phosphate and/or Di-n-butylformamide
 0- 3 % b.w. Phthalic acid alkyd-resin and
 7-16 % b.w. emulsifiers.

2. Herbicidal agents according to claim 1 wherein the weight ratio of tri-n-butylphosphate and/or di-n-butylformamide to the aromatic solvent is 10 : 1 to 1 : 5.

3. Herbicidal agents according to claims 1 or 2 wherein the aromatic solvent is chlorobenzene, chlorotoluene, xylene or an aromatic solvent fraction with a boiling point range of 135-321 °C.

4. Herbicidal agents according to claims 1 to 3 containing a combination of anionogenic and nonionogenic emulsifiers.

5. Herbicidal agents according to claim 4 containing calcium dodecylbenzenesulfonate or the calcium salts of chlorinated $(C_{13}-C_{15})$-alkylsulfonic acids in combination with fatty alcohol polyglycol ethers or $(C_8-C_{12})$ alkylphenol polyglycol ethers or with oxethylated castor oil as emulsifiers.

6. A process for combatting harmful plants in crop plants which comprises treating the plants or the cultivated areas with an effective amount of an agent according to claim 1 to 5.

7. Use of herbicidal agents according to claims 1 to 5 for combatting harmful plants.

**Revendications**

1. Produits herbicides caractérisés en ce qu'ils contiennent :

de 20 à 45 % en poids de linuron et de trifluraline, dans un rapport mutuel de 1 : 3 à 3 : 1,
de 53 à 11 % en poids d'un solvant aromatique,
de 35 à 11 % en poids de phosphate de tri-n-butyle et/ou de di-n-butylformamide,
de  0 à  3 % en poids d'une résine alkyde phtalique et
de  7 à 16 % en poids d'émulsionnants.

2. Produits herbicides selon la revendication 1 caractérisés en ce que le rapport pondéral du phosphate de tri-n-butyle et/ou du di-n-butylformamide au solvant aromatique est compris entre 10 : 1 et 1 : 5.

3. Produits herbicides selon l'une des revendications 1 et 2, caractérisés en ce qu'ils contiennent, comme solvants aromatiques, du chlorobenzène, un chlorotoluène, un xylène ou des fractions de solvants aromatiques bouillant dans l'intervalle allant de 135 à 312 °C.

4. Produits herbicides selon l'une quelconque des revendications 1 à 3, caractérisés en ce qu'ils contiennent une association d'émulsionnants anioniques et non ioniques.

5. Produits herbicides selon la revendication 4, caractérisés en ce qu'ils contiennent, comme émulsionnants, du dodécylbenzène-sulfonate de calcium ou des sels calciques d'acides alcane-sulfoniques chlorés en $C_{13}$-$C_{15}$ en association avec des produits de polyéthoxylation d'alcools gras ou des produits de polyéthoxylation d'alkylphénols à alkyles en $C_8$-$C_{12}$ ou de l'huile de ricin éthoxylée.

6. Procédé pour combattre des plantes nuisibles dans des cultures de plantes utiles, procédé caractérisé en ce qu'on applique sur celles-ci, ou sur les surfaces cultivées, une quantité efficace d'un produit selon l'une quelconque des revendications 1 à 5.

7. Application de produits herbicides selon l'une quelconque des revendications 1 à 5 pour combattre des plantes nuisibles.